# EUROPÄISCHE PATENTSCHRIFT

(11) **EP 1 642 683 B1**
(45) Veröffentlichungstag und Bekanntmachung des Hinweises auf die Patenterteilung: **04.05.2011**
(21) Anmeldenummer: 05107588.5
(22) Anmeldetag: 18.08.2005
(51) Int. Cl.: B25B 25/00, A44B 11/12, B60P 7/08

(54) **Ratschenspannvorrichtung zum Spannen von Gegenständen wie Gurten und Planen**
Ratchet device for tensioning articles such as belts and sheets
Dispositif à cliquet pour la mise sous tension de sangles ou baches

(30) Priorität: 11.09.2004 DE 102004044074; 09.12.2004 DE 102004059339
(43) Veröffentlichungstag der Anmeldung: 05.04.2006
(73) Patentinhaber: PWP SA, CH-1530 Payerne (CH)
(72) Erfinder: Suer, Arne, D-42958 Remscheid (DE)
(74) Vertreter: Müller, Enno

(56) Entgegenhaltungen:
- DE-C1- 19 609 141
- DE-U1- 8 805 725

## Beschreibung

Die Erfindung betrifft eine Ratschenspannvorrichtung gemäss dem Oberbegriff des Patentanspruchs 1 zum Spannen von Gegenständen wie Gurten und Planen mit einem Ratschenhebel, Ratschenzahnrad und einem Befestigungsteil, wobei das Ratschenzahnrad in dem Befestigungsteil gelagert ist und der Ratschenhebel in einer Grundstellung an dem Befestigungsteil mittels einer Klinke gesichert ist.

Ein derartiges Gerät ist aus der DE 196 09 141 C1 bekannt.

Gattungsgemäße Ratschenspannvorrichtungen sind seit langem aus dem Stand der Technik bekannt. Über diese Ratschenspannvorrichtungen kann mittels eines Gurtes oder dergleichen beispielsweise das Frachtgut eines Lastkraftwagens während des Fahrbetriebes durch Verzurren des Gurtes gegen übermäßige Schwankungen bzw. Verrutschen in bekannter Weise gesichert werden. Auch sind Ratschenspannvorrichtungen mit Antriebsachsen bekannt, über welche beispielsweise die Seitenplanen eines Lastkraftwagens gespannt werden. Hierzu ist die Ratschenspannvorrichtung horizontal oder vertikal über ein Befestigungsteil karosserieseitig festgelegt. Unabhängig von den zuvor beschriebenen Einsatzgebieten einer solchen Ratschenspannvorrichtung ist in der Regel die Funktion des Eingerichtes die gleiche. Über die Handbedienung einer Bedienperson wird ein Ratschenhebel in bekannter Weise schwenkbeweglich betätigt, wobei zumeist eine Sperrklinke oder dergleichen in Eingriff mit einem Ratschenzahnrad steht, über welches der Spannhub auf eine Antriebsachse übertragen wird, um einen Gurt oder eine Plane zu spannen. Eine Ratschenspannvorrichtung der in Rede stehenden Art beschreibt das deutsche Gebrauchsmuster 8805725. Dort ist vorgesehen, dass der Ratschenhebel der Spannvorrichtung ein Betätigungselement aufweist, mittels welchem der Ratschenhebel gegen unkontrolliertes Verschwenken gesichert ist.

Der Erfindung liegt die Aufgabe zugrunde, eine Ratschenspannvorrichtung der in Rede stehenden Art anzugeben, welche bei einfachem Aufbau sowohl eine benutzerfreundliche Bedienung als auch den Sicherheitsaspekt gewährleistet.

Diese Aufgabe ist bei einer Ratschenspannvorrichtung zum Spannen von Gegenständen wie Gurten und Planen mit den Merkmalen des Anspruches 1 gelöst, wobei darauf abgestellt ist, dass die Klinke verschwenkbar angeordnet ist und mittels eines Betätigungshebels, der durch Druck in Richtung auf das Befestigungsteil zu betätigen ist, aus der Sicherungsstellung in eine Freigabestellung bewegbar ist. Zufolge solcher Ausgestaltung ist ein Sicherungselement für einen Ratschenhebel in Form einer Klinke geschaffen, welches nur willensbetont relativ zu dem Ratschenhebel verschwenkbar ist, um den in seiner Grundstellung an dem Befestigungsteil verschwenkgesicherten Ratschenhebel gegenüber dem Befestigungsteil in eine Verschwenkfreigabestellung zu bringen. Diesbezüglich kann die gewünschte Schwenkbewegung der Klinke über einen Betätigungshebel, welcher dann durch Druck in Richtung auf das Befestigungsteil zu betätigen ist, erfolgen. Als bedienungsgünstig hat sich herausgestellt, dass der zu dem Ratschenhebel relativ verschwenkbare Betätigungshebel integraler Bestandteil des Ratschenhebels ist. So kann die Bedienperson insbesondere über den Daumen der den Ratschenhebel umfassenden Hand den Betätigungshebel und damit einhergehend die Klinke auslösen. Hierdurch ist eine Ratschenspannvorrichtung beispielsweise für den Pritschenaufbau eines Lastkraftwagens mit erhöhter Gebrauchssicherheit erzielt. Einem unkontrollierten Öffnen der Ratschenspannvorrichtung und damit einhergehenden Spannungsverlusten der Spannmedien, wie beispielsweise Gurte oder Planen oder dergleichen ist entgegengewirkt.

Weiter kann ein Sperrschieber und ein Mitnahmeschieber vorgesehen sein, wobei darauf abgestellt ist, dass der Mitnahmeschieber als ein einzeln montierbares Bauteil ausgebildet ist, das mit einem weiteren Mitnahmeteil aufgrund entsprechend gekrümmter Ausbildung des Mitnahmeschiebers- und/oder Mitnahmeteils formschlussverbunden ist. Hierdurch ist ein durch Formschluss zusammensetzbares Bauteil in Form des Mitnahmeschiebers für eine Ratschenspannvorrichtung realisiert, welches ohne großen Zeitaufwand und somit kostengünstig aus den einzelnen Bauteilen aufgrund entsprechender Ausbildung derselben zusammensetzbar ist. Auch kann durch die erfindungsgemäße Ausgestaltung im Bereich des Mitnahmeschiebers eine geringe Bauhöhe erreicht werden.

Bevorzugt ist vorgesehen, dass die Klinke an dem Ratschenhebel gelagert ist, so bspw. in einer rückwärtigen, quer zu dem Ratschenhebel ausgerichteten Lage. Dadurch ist auch nach der Freigabestellung der Klinke durch den Betätigungshebel ein funktionsloses Wegschwenken der Klinke von dem Befestigungsteil über den Ratschenhebel gegeben. Vorteilhaft ist auch, dass die Klinke im Zuge des Schließvorganges über den Betätigungshebel in die zwischen Ratschenhebel und Befestigungsteil herstellbare Sicherungsstellung bringbar ist. Auch kann vorgesehen sein, dass die Klinke an dem Befestigungsteil gelagert ist, wobei die Klinke im Zuge der Verschwenkung des Ratschenhebels ortsfest verweilt, während der Betätigungshebel bei Abschwenken des Ratschenhebels vom Zugriff auf die Klinke entfernt wird. Eine bevorzugte Ausgestaltung sieht vor, dass die Klinke an dem Betätigungshebel, so bspw. in einstückiger Ausführung, angebracht ist, so dass eine Druckausübung auf den Betätigungshebel ohne Zwischenschaltung weiterer Bauteile direkt auf die Klinke wirkt. Weiter wird vorgeschlagen, dass das Mitnahmeteil eine betätigungshebelfeste Aufnahme durchsetzt, dies beispielsweise unter Nutzung eines Stabilisierungssteges des Ratschenhebels. Hinsichtlich der Ausgestaltung des Mitnahmeteils wird vorgeschlagen, dass dieses als langgestrecktes U-Teil ausgebildet ist, wobei ein einem Betätigungselement am Ratschenhebel zugeordnetes Ende lediglich in Formschluss zu dem Betätigungselement steht. Hierbei kann die Formschlussverbindung über die eingangs erwähnte einfache Steckmontage erfolgen. Eine bevorzugte Ausgestaltung des Mitnahmeteiles sieht vor, dass dieses als rohrförmiger Körper ausgebildet ist. Als bedienungsgünstig erweist sich die Tatsache, dass das Betätigungselement zugleich die Klinke und den Mitnahmeschieber bei Druck auf das Betätigungselement in Richtung auf das Befestigungsteil einhergehend betätigt. Hier liegt praktisch eine von dem Betätigungselement ausgeführte Doppelentkopplung vor. Des Weiteren bringt die Erfindung zum Vorschlag, dass eine den Mitnahmeschieber beaufschlagende Druckfeder an dem Mitnahmeteil gefangen ist und dass die Druckfeder zwischen der Aufnahme und dem Mitnahmeschieber als jeweilige Anschläge gefangen ist. Diese Druckfeder wirkt in einer bevorzugten Ausgestaltung zugleich auf den Betätigungshebel. Entsprechend weist die Druckfeder eine Doppelfunktion auf. Zum Einen drückt die Feder den Mitnahmeschieber in Richtung auf das Ratschenzahnrad, so dass der Mitnahmeschieber in die Verzahnung des Zahnrades eingreift. Zum Anderen ist die Druckfeder immer bestrebt, den nicht druckbeaufschlagenden Betätigungshebel in dessen Grundstellung zu überführen. Alternativ ist auch die Anordnung zweier gesondert wirkender Druckfedern möglich. Darüber hinaus dient das als langgestrecktes U-Teil ausgebildete Mitnahmeteil praktisch als eine von der Druckfeder umgebene Verbindungsbrücke zwischen Mitnahmeschieber und Betätigungselement. Ein weiterer Vorteil ergibt sich noch durch die Maßnahme, dass die Druckfeder wie auch eine den Sperrschieber beaufschlagende Feder orientiert an einer Längsrichtung des Ratschenhebels bzw. des Befestigungsteiles angeordnet sind und dass die Federn in einem Längsquerschnitt sich überlappend angeordnet sind. Damit der mit dem Ratschenhebel in der Verschlussstellung zusammenwirkende Sperrschieber nicht in eine, beispielsweise mittels eines von außen auf den Sperrschieber wirkenden Fremdkörpers, Freigabestellung verlagerbar ist, schlägt die Erfindung vor, dass der Ratschenhebel einen Blockierungsabschnitt aufweist zur Sperrung einer Bewegung des Sperrschiebers in die Freigabestellung. Diesbezüglich wird weiter vorgeschlagen, dass der Blockierungsabschnitt jedenfalls in der Verschlussstellung des Ratschenhebels wirksam ist und dass zwei Blockierungsvorsprünge jeweils an einem Arm des Ratschenhebels ausgebildet sind. Um eine Belastungsminderung des Ratschenzahnrades zu erreichen, ist vorgesehen, dass der Mitnahmeschieber zwei in Drehrichtung des Ratschenhebels belastende Sperrabschnitte aufweist. Alternativ kann auch vorgesehen sein, dass zur Belastungsminderung des Ratschenzahnrades auch der Sperrschieber zwei in Drehrichtung des Ratschenhebels beabstandete Sperrnasen aufweisen kann. Bevorzugt ist aber eine Kombination aus dem zwei Sperrabschnitte aufweisenden Mitnahmeschieber und dem zwei Sperrnasen aufweisenden Sperrschieber. Infolgedessen ist eine zweifach wirkende Belastungsminderung des Ratschenzahnrades gegeben. Durch eine derartige Anordnung des Eingerichtes ist hier in vorteilhafter Weise die Möglichkeit gegeben, dass die Ratschenspannvorrichtung sich als Gesamtes durch eine niedrige Bauhöhe auszeichnet. Entsprechend diesem Sachverhalt ist eine Bauhöhe der Ratschenspannvorrichtung zwischen 30 und 40 mm realisierbar. Grundsätzlich kann die vorbeschriebene Ratschenspannvorrichtung sowohl horizontal als auch vertikal karosserieseitig festgelegt werden, um verschiedene Anwendungsbereiche abzudecken.

Nachfolgend werden mehrere Ausführungsbeispiele der Erfindung anhand beigefügter Zeichnung erläutert. Es zeigt:
- Fig.1: eine perspektivische Ansicht der erfindungsgemäßen Spannvorrichtung betreffend eine Grundstellung;
- Fig. 2: die perspektivische Innenansicht der Ratschenspannvorrichtung mit maximal geöffnetem Ratschenhebel;
- Fig. 3: die Explosionsperspektive der Ratschenspannvorrichtung;
- Fig. 4: eine Ansicht auf die Ratschenspannvorrichtung gemäß der Situation in Fig.1;
- Fig. 5: den Schnitt gemäß der Linie V - V in Fig. 4;
- Fig. 6: den Schnitt gemäß der Linie VI - VI in Fig. 4;
- Fig. 7: eine Folgedarstellung gemäß Fig. 6, wobei hier der Betätigungshebel schwenkbeweglich verlagert ist;
- Fig. 8: eine Folgedarstellung gemäß Fig. 7 mit in seine Ausgangsposition zurückverlagertem Betätigungshebel und eine schwenkbewegliche Zwischenstellung des Ratschenhebels;
- Fig. 9: die Folgedarstellung gemäß Fig. 8 mit in eine maximale Endstellung verschwenktem Ratschenhebel;
- Fig. 10: eine Schnittdarstellung einer weiteren Ausführungsform der Ratschenspannvorrichtung in der Grundstellung;
- Fig.11: eine dritte Ausführungsform der Ratschenspannvorrichtung in der Grundstellung;
- Fig. 12: eine vierte Ausführungsform der Ratschenspannvorrichtung in der Grundstellung und
- Fig. 13: die perspektivische Ansicht der Ratschenspannvorrichtung gemäß Fig.12.

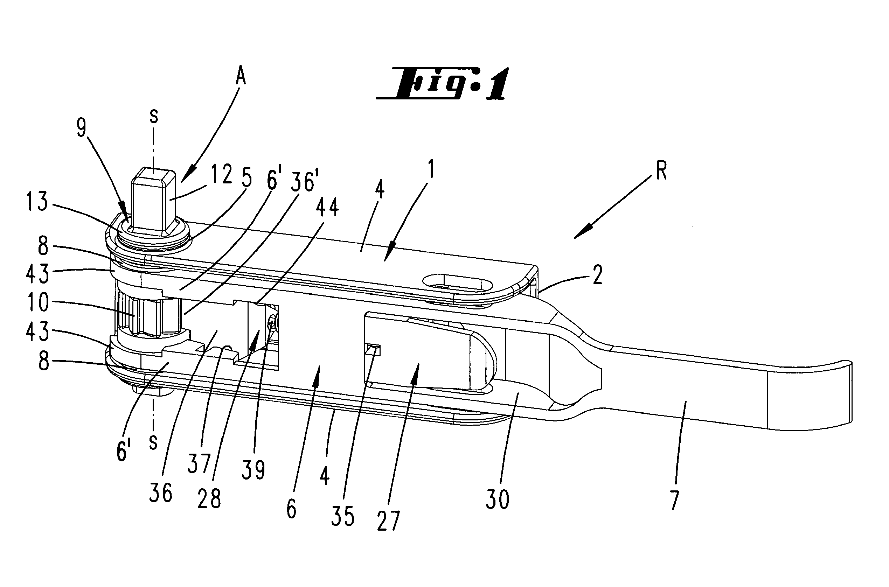

Dargestellt und beschrieben ist zunächst mit Bezug zu Figur 1 eine Ratschenspannvorrichtung R für einen Pritschenaufbau eines nicht dargestellten Lastkraftwagens. Hierbei ist eine Festlegung der Ratschenspannvorrichtung R an die Karosserie sowohl in horizontaler als auch in vertikaler Ausrichtung möglich. Bevorzugt ist aber eine horizontale festgelegte Ausrichtung der Ratschenspannvorrichtung R. Letztere dient in bekannter Weise zum Spannen von Gegenständen wie beispielsweise die an dem Pritschenaufbau des Lastkraftwagens führbar angeordneten Seitenplanen. Zur Karosseriefestlegung besitzt die Ratschenspannvorrichtung R ein im Querschnitt U-förmig ausgestaltetes Befestigungsteil 1 mit den U-Steg 2 durchsetzende Befestigungsbohrungen 3, durch welche nicht dargestellte Befestigungsschrauben treten. Die deckungsgleich gegenüberliegend ausgerichteten U-Schenkel 4 sind jeweils am Randbereich eines freien Stirnendes von zueinander fluchtend ausgerichteten kreisrunden Lageröffnungen 5 durchsetzt.

Ein in dem Befestigungsteil 1 schwenkbeweglich angeordneter Ratschenhebel 6 besitzt an seinem einem Betätigungsabschnitt 7 gegenüberliegenden freien Ende jeweils zwei aufeinander zu gerichtete kreisrunde Lageraugen 8, welche jeweils im montierten Zustand axial um eine Schwenkachse s angeordnet sind. Darüber hinaus bilden die voneinander weg weisenden Außenstirnflächen der Lageraugen 8 ein Abstandsmaß w, welches etwas geringer bemessen ist als das von den Innenwandungen der U-Schenkel 4 gebildete Gabelmaß x.

Eine mit dem Ratschenhebel 6 zusammenwirkende Antriebseinheit A, über welche der Ratschenhebel 6 an das Befestigungsteil 1 angelenkt ist, setzt sich aus einer Antriebswelle 9, einem Ratschenzahnrad 10 und zwei aus einem Polyamidwerkstoff gefertigte Lagerbuchsen 11 zusammen. Aus der Antriebswelle 9 ist an einem freien Ende ein axial ausgerichteter Vierkant 12 ausgeformt, welcher seinerseits einem Ringkragen 13 entspringt. Unterhalb des Ringkragens 13 erstreckt sich der restliche Wellenabschnitt 14 derart, dass dieser als eine Rundwelle mit diametral gegenüberliegenden Abflachungen ausgebildet ist. Die zentrale Körperachse der Antriebswelle 9 bildet die Schwenkachse s. Die Lagerbuchsen 11 weisen jeweils im montierten Zustand aufeinander zu gerichtet einen scheibenförmig ausgebildeten Ringkragen 15 auf, wobei jeweils der Außendurchmesser des Ringkragens 15 konform ist mit dem Außendurchmesser des Ringkragens 13 der Antriebswelle 9. Ferner sind jeweils die Lagerbuchsen 11 von einer axial ausgerichteten kreisrunden Öffnung 16 durchsetzt. Der jeweilige Innendurchmesser der Öffnung 16 ist angepasst an den Außendurchmesser des Rundwellenabschnittes 14. Das im Montagezustand gemäß den Darstellungen axial zwischen den Lagerbuchsen 11 gefangene Ratschenzahnrad 10 ist von einer zentrischen Durchstecköffnung 17 durchsetzt, welche ihrerseits an den Querschnitt des Rundwellenabschnittes 14 angepasst ist. Das heißt, dass auch die Durchstecköffnung 17 diametral gegenüberliegende Abflachungen aufweist. Somit ist zwischen der Antriebswelle 9 und dem Ratschenzahnrad 10 im montierten Zustand eine formschlüssige Verbindung herstellbar.

Hinsichtlich der über die Antriebseinheit A schwenkbeweglichen Festlegung des Ratschenhebels 6 an dem Befestigungsteil 1 ist vorgesehen, dass jeweils eine Lagerbuchse 11 mit ihrem an dem Ringkragen 15 angeformten durchmesserreduzierten kreisrunden Abschnitt durch die Lageraugenöffnung 8 des zugeordneten Ratschenhebels 6 in die Lageröffnung 5 des Befestigungsteiles 1 eintaucht, so dass im Montagezustand die Stirnflächen der Ringkragen 15 aufeinander zu gerichtet sind. Hierdurch ist der notwendige Aufnahmeabschnitt für das Ratschenzahnrad 10 gebildet. Die zwischen den U-Schenkeln 4 des Befestigungsteiles 1 schwenkbewegliche Festlegung der zuvor beschriebenen Konstruktionselemente erfolgt über den abgeflachten Wellenabschnitt 14 der Antriebswelle 9. Diesbezüglich liegt der Wellenabschnitt 14 sowohl jeweils in den Öffnungen 16 der Lagerbuchsen 11 als auch in der Durchstecköffnung 17 des Ratschenzahnrades 10 ein, so dass der unter dem Vierkant 12 angeformte Ringkragen 13 mit seiner von dem Vierkant 12 abgewandten Unterseite auf dem minimal aus der Lageröffnung 5 des Befestigungsteiles 1 herausragenden Stirnflächenrand der Öffnung 16 der Lagerbuchse 11 flächig aufliegt. Zur vertikalen Sicherung der mit dem Befestigungsteil 1 und dem Ratschenhebel 6 zusammenwirkenden Antriebswelle 9 besitzt diese an ihrem von dem Vierkant 12 abgewandten freien Ende eine stirnflächig eingebrachte nicht dargestellte axiale Sacklochbohrung. Diese dient zur Aufnahme einer ebenfalls nicht dargestellten Schraube, mittels welcher die Antriebswelle 9 vertikal gesichert ist.

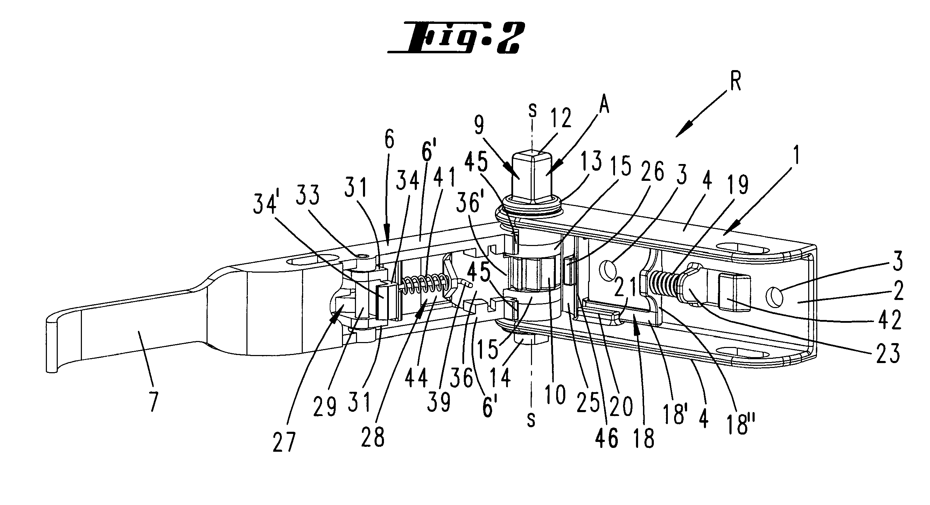

Auf dem den Boden des Befestigungsteiles 1 ausbildenden U-Steg 2 ist ein rahmenförmig ausgebildeter Sperrschieber 18 gegen die Federkraft einer Feder 19 längsverschieblich angeordnet. Zur Führbarkeit des Sperrschiebers 18 weisen die U-Schenkel 4 des Befestigungsteiles 1 jeweils innenwandig aufeinander zugewandt ausgeformte Vorsprünge 20 auf. Diese sind jeweils quer zur Längserstreckung des Befestigungsteiles 1 ausgerichtet und mit Abstand zu dem Steg 2 positioniert. Mittels dieses Abstandes ist eine Führungsnut 21 für den Sperrschieber 18 geschaffen. Wie in Figur 2 zu erkennen, liegt der Sperrschieber 18 mit seinen Rahmenschenkeln 18' in dieser Führungsnut 21 ein, wobei die Rahmenschenkel 18' jeweils von den Vorsprüngen 20 überfangen werden. Der die Rahmenschenkel 18' miteinander verbindende Rahmensteg 18" besitzt zentral eine Verbreiterung, an welche ein von dem Ratschenzahnrad 10 wegweisender und abragender Zapfen 22 angeformt ist. Um diesen Zapfen 22 ist das eine Windungsende der Druckfeder 19 angeordnet, welches Windungsende im montierten Zustand gemäß Figur 2 sich flächig auf den Rahmensteg 18" abstützt. Das andere gegenüberliegende Windungsende stützt sich flächig an einem, einen das Windungsende aufnehmenden Zapfen 24 aufweisenden Widerlager 23 ab. Das Widerlager 23 wird von einem aus dem U-Steg 2 ausgeformten Abschnitt gebildet.

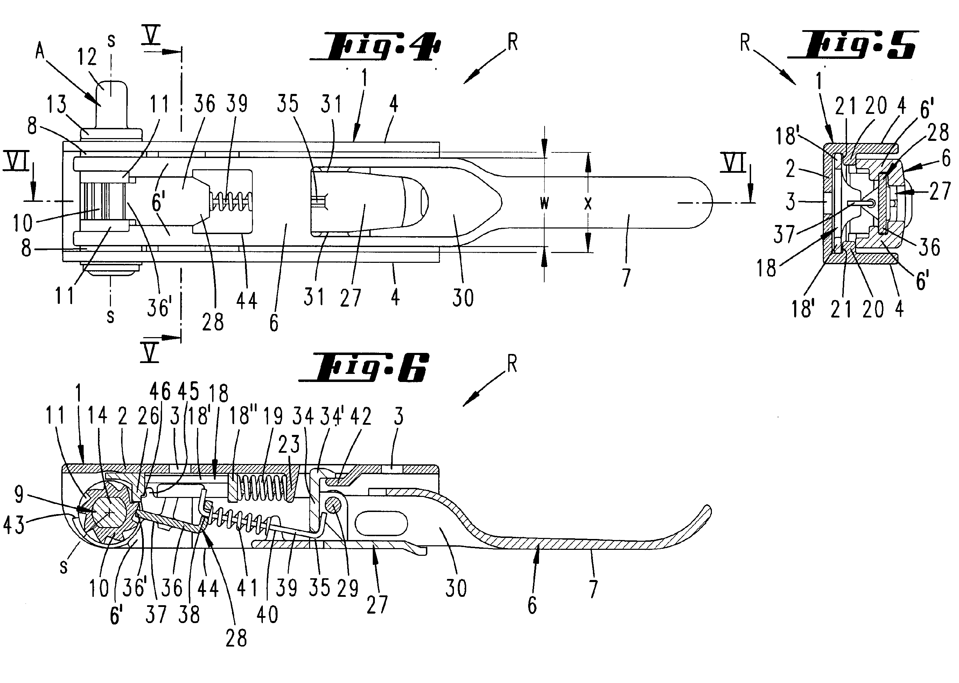

Der Sperrschieber 18 besitzt einen dem Rahmensteg 18" gegenüberliegend angeordneten Abschnitt 25, der seinerseits einen schneeschieberartigen Querschnitt aufweist. Aus dem die Verzahnung des Ratschenzahnrades 10 umgebenden Abschnitt 25 ist eine quer zur Erstreckungslage des Sperrschiebers 18 ausgerichtete Sperrnase 26 ausgeformt. Mittels dieser Sperrnase 26 greift der Sperrschieber 18 in der in Figur 6 dargestellten Grundstellung der Ratschenspannvorrichtung R in die Verzahnung des Ratschenzahnrades 10 ein, wodurch eine Blockierung des Ratschenzahnrades 10 gegen Uhrzeigersinn gegeben ist. Hierbei stützt sich die kurze Steilflanke der Verzahnung flächig auf der Sperrnase 26 ab.

Wie den Darstellungen zu entnehmen, ist der Ratschenhebel 6 sowohl Träger eines Betätigungshebels 27 als auch eines mit dem Betätigungshebel 27 zusammenwirkenden Mitnahmeschiebers 28. Die Anordnung des Betätigungshebels 27 in dem Ratschenhebel 6 ist derart, dass dieser jenseits des Betätigungsabschnittes 7 positioniert ist und mittels einer quer zur Längserstreckung des Ratschenhebels 6 ausgerichteten Betätigungsachse 29 in einem Betätigungsraum 30 des Ratschenhebels 6 schwenkbeweglich eingelassen ist. Der fast gänzlich den Betätigungshebel 27 umgebende Betätigungsraum 30 ist etwa topfförmig ausgeformt und weist einen halboffenen Boden auf. Der einstückig ausgeformte im Querschnitt etwa winkelförmige Betätigungshebel 27 besitzt zwei parallel zueinander ausgerichtete in den Betätigungsraum 30 hineinragende Seitenflanken 31. Diese sind jeweils unmittelbar am Randbereich von fluchtend zueinander ausgerichteten Durchstecköffnungen 32 für die Betätigungsachse 29 durchsetzt. Hierbei ist der Durchmesser der Durchstecköffnungen 32 etwas größer bemessen als der Querschnitt der Betätigungsachse 29. Zur schwenkbeweglichen Festlegung des mit der Betätigungsachse 29 zusammenwirkenden Betätigungshebels 27 sind am Randbereich des halboffenen Bodens des Betätigungsraumes 30 fluchtend zueinander ausgerichtete Lageröffnungen 33 ausgeformt. In diese Lageröffnungen 33 liegen jeweils die über die Seitenflanken 31 hervorstehenden freien Enden der Betätigungsachse 29 drehfest ein. Der die Seitenflanken 31 miteinander verbindende Rücken formt eine Klinke 34 aus, die ihrerseits einen L-förmigen Querschnitt aufweist. Hierbei übernimmt der auf das Befestigungsteil 1 ausgerichtete kurze L-Schenkel die Funktion eines, eine Auflaufschräge aufweisenden Sperrabschnitts 34'. Des Weiteren ist die Klinke 34 von einem dem Sperrabschnitt 34' gegenüberliegenden Fenster 35 durchsetzt. Letzteres erstreckt sich in Erstreckungslage des Ratschenhebels 6 und ist unterhalb der Druckfläche des Betätigungshebels 27 angeordnet.

Der einerends mit dem Betätigungshebel 27 und andernends mit dem Ratschenzahnrad 10 zusammenwirkende, in dem Betätigungshebel 6 integrierte Mitnahmeschieber 28 besteht im Wesentlichen aus drei zusammensetzbaren Bauteilen. Über eine etwa im Querschnitt winkelförmig ausgestaltete Schieberplatte 36 steht der Mitnahmeschieber 28 in der in Figur 6 dargestellten Grundstellung in Verzahnungseingriff mit dem Ratschenzahnrad 10. Hierfür besitzt die Schieberplatte 36 einen in die Verzahnung des Ratschenzahnrades 10 eingreifenden Sperrabschnitt 36', welcher seinerseits mit seiner Stirnfläche flächig auf einer zwei benachbarte Steilflanken verbindenden abgerundeten Zahnflanke aufliegt. Die Ausrichtung der Schieberplatte 36 ist derart, dass diese über eine aus dem Ratschenhebel 6 ausgeformte Führungsnut 37 eine auf das Ratschenzahnrad 10 zugerichtete ansteigende Schräglage einnimmt. Der auf das Befestigungsteil zugewandte kürzere Schenkel der Schieberplatte 36 ist von einer zentral angeordneten Durchstecköffnung 38 durchsetzt. Über Letztere steht die Schieberplatte 36 mit einem in die Durchgangsöffnung einsteckbaren U-Schenkel eines Mitnahmeteiles 39 in Eingriff, wobei der deckungsgleich gegenüberliegende andere U-Schenkel des Mitnahmeteils 39 das Fenster 35 durchsetzend die Klinke 34 hintergreift. Somit ist über das rohrförmig ausgestaltete Mitnahmeteil 39 eine Verbindung zwischen dem Betätigungshebel 27 und der Schieberplatte 36 hergestellt. Der langgestreckte U-Steg des Mitnahmeteils 39 wird hierbei von einer aus dem Betätigungshebel 6 ausgeformten Führungsnut 40 flankiert. Die dritte Komponente des Mitnahmeschiebers 28 ist eine den U-Steg des Mitnahmeteiles 39 axial umgebende Druckfeder 41. Hierbei stützt sich das eine Windungsende flächig am Randbereich der Durchstecköffnung 38 der Schieberplatte 36 ab. Das andere gegenüberliegende Windungsende liegt flächig auf dem etwa kegelstumpfförmig ausgeformten und auf das Befestigungsteils zugewandten Sockel der Führungsnut 40 auf.

Um über die karosserieseitig festgelegte Ratschenspannvorrichtung R Spannungskräfte auf die bereits erwähnte Seitenplane des Lastkraftwagens zu übertragen, ist zuerst in bekannter Weise der an dem freien Ende der Seitenplane angeordnete Antriebsstrang auf den Vierkant 12 der Antriebseinheit A aufzustecken. Hinsichtlich dessen besitzt der Antriebsstrang der Seitenplane eine Aufstecköffnung, welche im Querschnitt konform zu dem Querschnitt des Vierkantes 12 ist. Die Bedienperson kann nunmehr den Betätigungsabschnitt 7 des Ratschenhebels 6 mit einer Hand umfassen, um den Ratschenhebel 6 aus der gesicherten Grundstellung zu bringen. Hierzu ist insbesondere mit dem Daumen der den Ratschenhebel 6 umfassenden Hand Druck auf den Betätigungshebel 27 auszuüben, so dass letzterer in Richtung auf das Befestigungsteil verschwenkt. Einhergehend mit der Verschwenkung des Betätigungshebels 27 gibt der Klinkensperrabschnitt 34' den mit einem Gegensperrabschnitt 42 zusammenwirkenden Hintergriff frei. Letzterer Gegensperrabschnitt 42 ist auf dem Boden des Befestigungsteiles 1 ausgeformt und auf den Ratschenhebel 6 ausgerichtet. Im Zuge der Schwenkbewegung des Betätigungshebels 27 wird auch der Mitnahmeschieber 28 von der Verzahnung des Ratschenzahnrades 10 weggezogen. Dies deshalb, da der in dem Fenster 35 des Betätigungshebels 27 einliegende Schenkel des U-förmig ausgestalteten Mitnahmeteils 39 der Schwenkbewegung des Betätigungshebels 27 folgt und gegen die Federkraft der Feder 41 die in der Führungsnut 37 einliegende Schieberplatte 36 mitschleppt.

Somit hat der Betätigungshebel 27 bei dessen Betätigung eine Doppelfunktion, sowohl die Freigabe der Klinke 34 bzw. des Sperrabschnittes 34' als auch das Einziehen des Mitnahmeschiebers 28 betreffend.

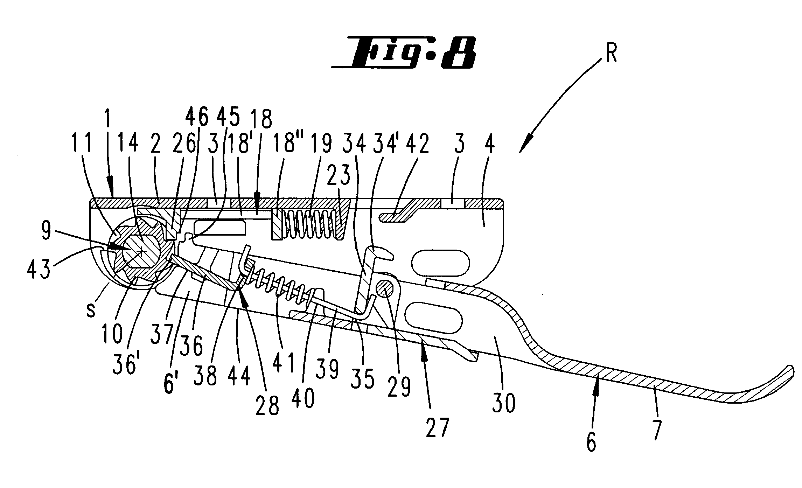

Nun ist der Ratschenhebel 6 entsichert. Damit die Bedienperson nun Spannungskräfte auf die Seitenplane des Lastkraftwagens über die Ratschenspannvorrichtung R einbringen kann, muss dieser den Daumendruck auf den Betätigungshebel 27 lösen, damit der Betätigungshebel 27 über die Feder 41 des Mitnahmeschiebers 28 in seine Ausgangsposition verschwenkt wird. Hierbei verlagert sich auch der Mitnahmeschieber 28 in Richtung auf die Verzahnung des Ratschenzahnrades 10. Diese Zwischenstellung zeigt die Figur 8. Um nun in üblicher Weise über die Antriebsachse 9 eine Spannkraft auf die Seitenplane bzw. auf deren Steckachse zu bringen, muss die Bedienperson den umfassten Ratschenhebel 6 in bekannter Weise um die Schwenkachse s hin und her verschwenken. Hierbei schleppt die Schieberplatte 36 des Mitnahmeschiebers 28 bedingt durch den Zahneingriff des Abschnittes 36' das Ratschenzahnrad 10 um die Schwenkachse s mit. Damit die über das Ratschenzahnrad 10 aufgebaute Spannkraft nicht verloren geht, ist der in dem Befestigungsteil 1 geführte Sperrschieber 18 vorgesehen, welcher seinerseits mittels seiner Sperrnase 26 im ständigen Zahneingriff mit dem Ratschenzahnrad 10 steht. Die Aufgabe des Mitnahmeschiebers 28 umfasst lediglich das Mitschleppen des Ratschenzahnrades 10 in Spannungsrichtung. Bei Verschwenkung des Ratschenhebels 6 entgegen der Spannungsrichtung bzw. in Richtung auf das Befestigungsteil 1 gleitet die Schieberplatte 36 des Mitnahmeschiebers 28 jeweils gegen die Federkraft der Feder 41 über die Verzahnung des Ratschenzahnrades 10 hinweg.

Ist die notwendige Spannkraft auf die Seitenplane mittels der Ratschenspannvorrichtung R erfolgt, kann die Bedienperson den Ratschenhebel 6 wieder in seine gesicherte Grundstellung bringen derart, dass diese den Betätigungshebel 27 mittels dessen Daumen der umfassenden Hand wie bereits zuvor beschrieben betätigt und willensbetont den Hintergriff des Sperrabschnittes 34' ausführt.

Ist eine Aufhebung der zuvor auf die Seitenplane aufgebrachten Spannkräfte über die Ratschenspannvorrichtung R durch die Bedienperson erwünscht, kann diese wie bereits zuvor beschrieben den Ratschenhebel 6 entsichern und mit eingedrücktem Betätigungshebel 27 den Ratschenhebel 6 in seine maximale Stellung verschwenken, so dass kein Eingriff der Schieberplatte 36 zu dem Ratschenzahnrad 10 besteht. Der maximale Verschwenkwinkel des Ratschenhebels 6 kann hierbei beispielsweise zwischen 105 und 115° liegen. Hat der Ratschenhebel 6 seinen maximalen Schwenkwinkel erreicht, beaufschlagen jeweils zwei fluchtend zueinander ausgerichtete außenseitig an den Lageraugen 8 ausgeformte Radialfortsätze 43 die vorderste Randkante des schaufelförmig ausgestalteten Abschnittes 25 des Sperrschiebers 18. Damit einhergehend wird der Sperrschieber 18 auf dem Boden des Befestigungsteiles 1 gegen die Federkraft der Feder 19 in Richtung auf den Betätigungshebel 27 verschoben. Dabei tritt die Sperrnase 26 aus dem mit dem Ratschenzahnrad 10 zusammenwirkenden Zahneingriff. Hierdurch ist die auf die Seitenplane aufgebrachte Spannkraft sofort aufgehoben, da sowohl die Antriebswelle 9 als auch das Ratschenzahnrad 10 frei um die Schwenkachse s drehbar sind.

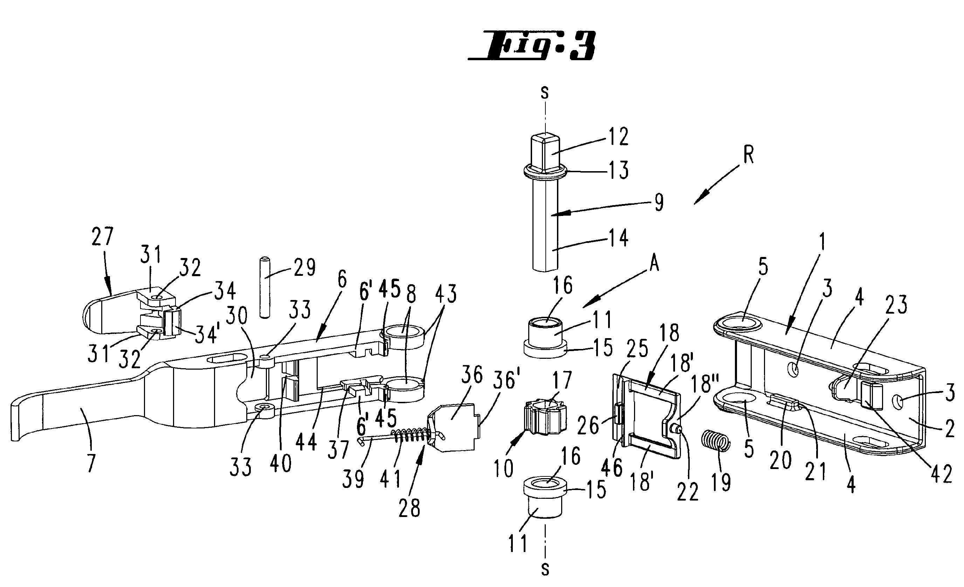

Wie insbesondere die Figur 3 zeigt, ist der einzeln montierbare Mitnahmeschieber 28 ohne großen Aufwand rückwärtig in den Ratschenhebel 6 einsetzbar. Zum erleichterten Einbau besitzt der Ratschenhebel 6 hierfür ein von den Lageraugen 8 ausgehendes in den Ratschenhebel 6 eingelassenes randoffenes Fenster 44 mit etwa T-förmiger Grundkontur. Auch kann über dieses Fenster 44 die ordnungsgemäße Funktion des Ratschengetriebes visuell kontrolliert werden. Durch die Ausformung des Fensters 44 sind jeweils zwei aufeinander zugewandte Arme 6' des Ratschenhebels 6 ausgebildet. An diesen Armen 6' sind jeweils die kreisrunden Lageraugen 8 angeformt. Mit Abstand zu diesem jeweiligen Anformungsbereich besitzen die Arme 6' jeweils rückwärtig angeordnete und von den Armen 6' abragende Blockierungsvorsprünge 45, welche ihrerseits im Verschlusszustand der Ratschenspannvorrichtung auf das Befestigungsteil 1 weisen. Wie in Figur 6 zu erkennen, hintergreifen die Blockierungsvorsprünge 45 rückwärtig den Abschnitt 25 des Sperrschiebers 18. Hierfür besitzt der Abschnitt 25 rückwärtig eine parallel zu der Schwenkachse s verlaufende stufenförmige Ausbildung 46. Durch das Zusammenwirken der Blockierungsvorsprünge 45 und der stufenförmigen Ausbildung ist der Sperrschieber 18 in der Verschlussstellung der Ratschenspannvorrichtung R rückverlagert gesichert.

Das heißt, dass der Sperrschieber 18 beispielsweise durch Außeneinwirkung eines Fremdkörpers nicht in die Freigabestellung verlagerbar ist. Somit ist die auf die Spannmedien aufgebrachte Spannkraft von außen nicht unkontrolliert aufhebbar.

Ebenfalls ist durch den zuvor beschriebenen Konstruktionsaufbau eine Ratschenspannvorrichtung R geschaffen, die für den Benutzer eine leichte Hebelbetätigung mit sich bringt. Dies auch, da der Mitnahmeschieber 28 nur für das Mitschleppen des Ratschenzahnrades 10 verantwortlich ist und nicht für dessen Blockade. Auch die aus einem Polyamidwerkstoff hergestellten Lagerbuchsen 11 begünstigen die Leichtbetätigbarkeit der Ratschenspannvorrichtung R. Überdies ist letztere hierdurch praktisch schmierstofffrei.

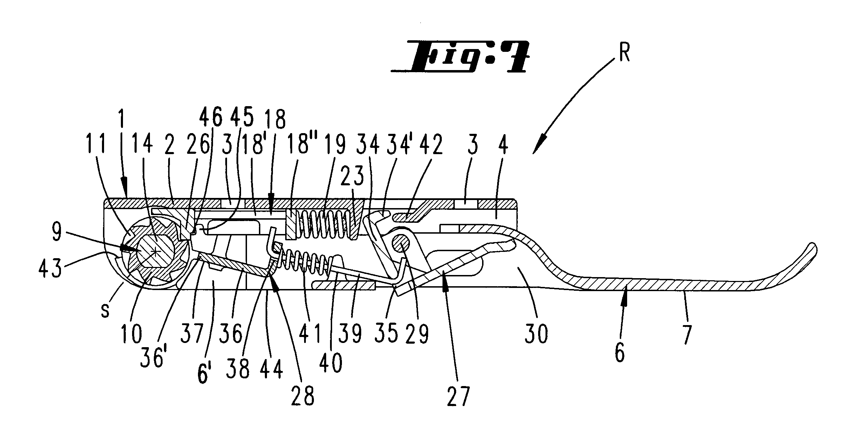

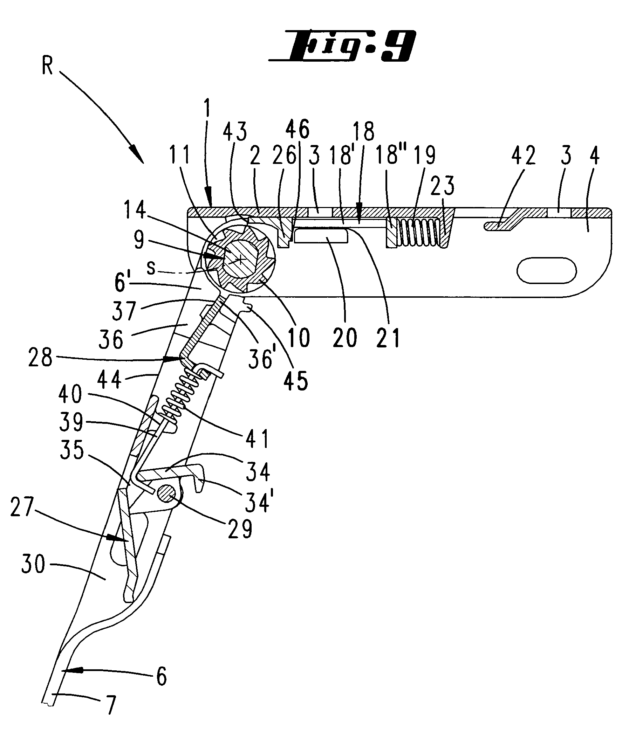

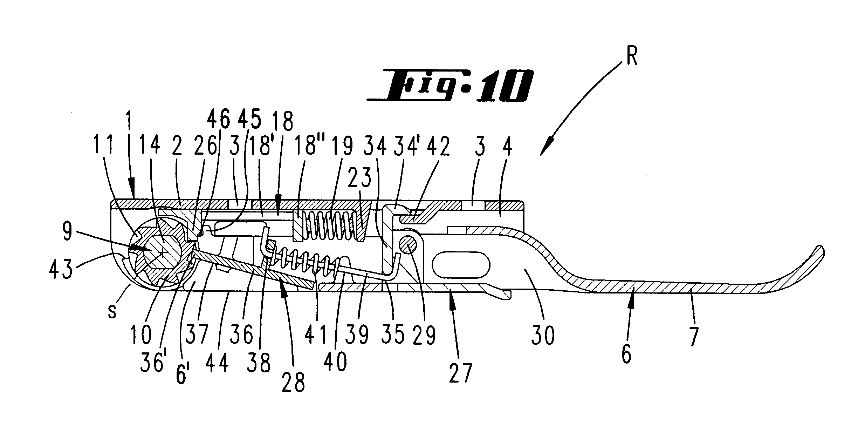

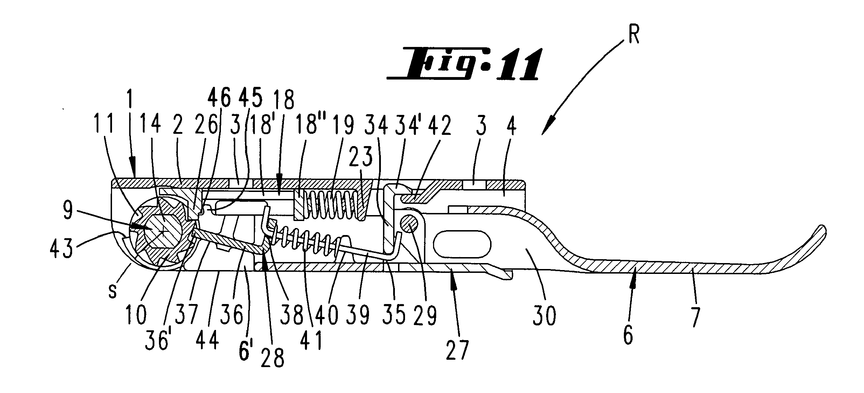

In den Figuren 10 und 11 sind jeweils alternative Ausführungsformen der Ratschenspannvorrichtung R dargestellt. In der Ausführungsform gemäß Figur 10 ist die Schieberplatte 36 des Mitnahmeschiebers 28 in ihrer Gestalt modifiziert derart, dass gegenüber der zuvor beschriebenen, im Querschnitt winkelförmig ausgestalteten Schieberplatte 36 hier die Schieberplatte 36 eine etwa T-förmige Gestalt aufweist. Der auf das Befestigungsteil 1 ausgerichtete T-Schenkel ist hierbei asymmetrisch auf der Schieberplatte 36 angeordnet. Die Führungsnut 37 ist in ihrer Erstreckungslage etwa der der Schieberplatte 36 angepasst. Die Schieberplatte 36 deckt aufgrund der Ausgestaltung das Fenster 44 des Ratschenhebels 6 nahezu vollständig ab. Entsprechend ist das Mitnahmeteil 39 des Mitnahmeschiebers 28 in einer Verstecktlage. Der restliche Konstruktionsaufbau sowie die Funktion entsprechen der in Figur 1 bis 9 beschriebenen Konstruktion. Deshalb tragen gleiche Bauteile gleiche Bezugszeichen.

Das in Figur 11 dargestellte Ausführungsbeispiel der Ratschenspannvorrichtung R gleicht praktisch dem in Figur 1 bis 9 dargestellten Ausführungsbeispiel. Deshalb tragen auch hier die Konstruktionselemente die gleichen Bezugszeichen. Wie zu erkennen, weist der Ratschenhebel 6 ein in seiner Längserstreckung verkürztes Fenster 44 auf, so dass der in seiner Längserstreckung verlängerte vordere Wandungsquerschnitt des Ratschenhebels 6 das Mitnahmeteil 39 des Mitnahmeschiebers 28 überdeckt.

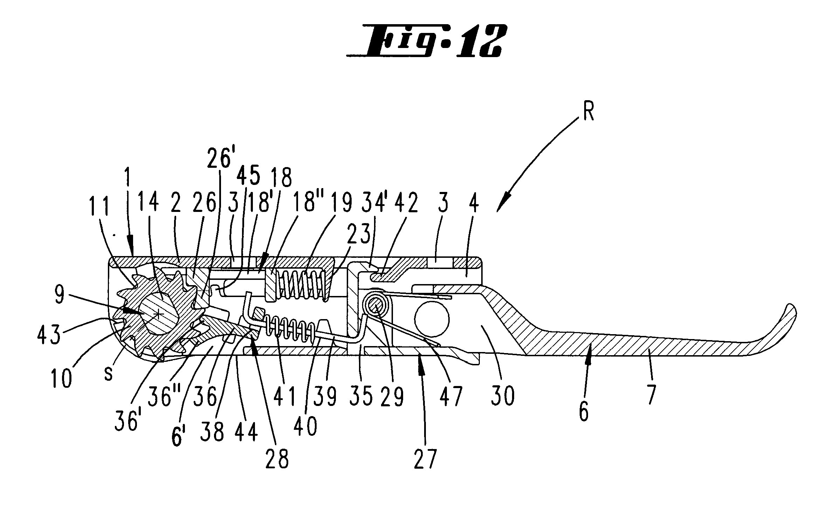

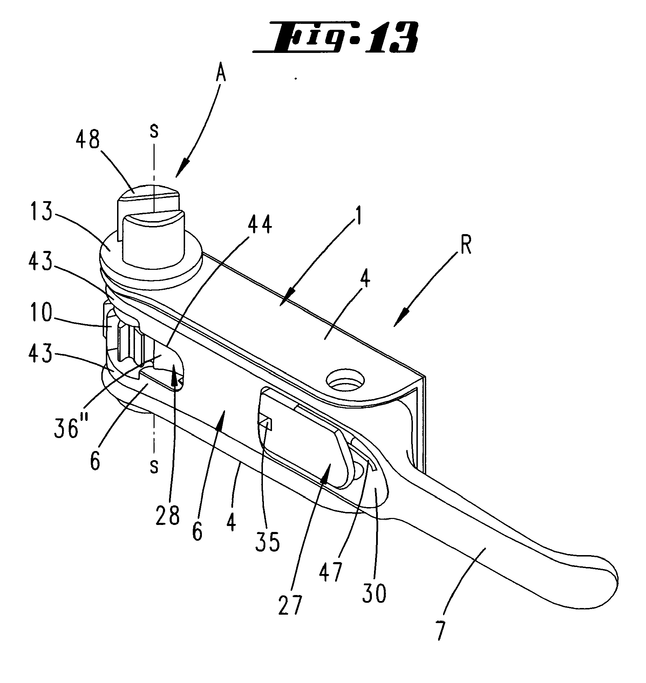

In den Figuren 12 und 13 ist ein viertes Ausführungsbeispiel der Ratschenspannvorrichtung R dargestellt, wobei dieses praktisch den in den Figuren 1 bis 11 dargestellten Ausführungsbeispielen gleicht. Deshalb tragen auch hier die Konstruktionselemente die gleichen Bezugszeichen. Während das in den Figuren 1 bis 11 dargestellte Ratschenzahnrad 10 in Umfangsrichtung eine neunteilige Verzahnung aufweist, ist vorgesehen, dass in dem in den Figuren 12 und 13 dargestellten Ausführungsbeispiel das Ratschenzahnrad 10 eine zwölfteilige Verzahnung aufweist. Demzufolge ist während des Spannvorganges des Ratschenhebels 6 gegenüber den zuvor beschriebenen Ausführungsbeispielen eine Erhöhung der Zahn-Taktung gegeben, so dass hierdurch auf die Spannmedien eine feinere Spannkraft aufbringbar ist. Weiter wird vorgeschlagen, dass der Sperrschieber 18 zum Verzahnungseingriff zusätzlich zu seiner Sperrnase 26 eine weitere Sperrnase 26' besitzt. Diese ist wie zu erkennen, unterhalb an der Sperrnase 26 stufenförmig ausgebildet und ebenfalls aus dem Abschnitt 25 auf das Ratschenzahnrad 10 weisend zentral ausgeformt, wobei auch hier die kurze Steilflanke der Verzahnung sich flächig, bei Zahneingriff, auf der Sperrnase 26' abstützt. Die Schieberplatte 36 des Mitnahmeschiebers 28 besitzt, wie zu erkennen, zusätzlich zu ihrem Sperrabschnitt 36' einen weiteren Sperrabschnitt 36" derart, dass dieser zum Fenster 44 weisend von der Schieberplatte 36 abragt, so dass die Schieberplatte 36 zum Ratschenzahnrad 10 weisend gabelförmig ausgebildet ist. Durch die weitere Sperrnase 26' des Sperrschiebers 18 und den weiteren Sperrabschnitt 36" der Schieberplatte 36 ist jeweils bei einem Zusammenwirken dieser Bauteile mit dem Ratschenzahnrad 10 eine auf die Verzahnung des Ratschenzahnrades 10 einwirkende Kräfteverteilung gegeben. Weiter ist vorgesehen, dass zur Federkraftunterstützung des Betätigungshebels 27 um dessen Betätigungsachse 29 eine Druckfeder 47 angeordnet ist. Hierbei stützt sich ein Federende auf dem Boden des Betätigungsraumes 30 und das andere Federende unterseitig an dem Betätigungshebel 27 ab. Somit ist der Betätigungshebel 27 sowohl durch die Druckfeder 41 des Mitnahmeschiebers 28 als auch durch die Druckfeder 47 doppelt federkraftunterstützt. Wie in Figur 13 dargestellt, wird vorgeschlagen, dass die Antriebseinheit A anstelle des um die Schwenkachse s angeordneten Vierkantes 12 einen Gabelkopf 48 für den nicht dargestellten Antriebsstrang der Seitenplane aufweist.

## Patentansprüche

1. Ratschenspannvorrichtung (R) zum Spannen von Gegenständen wie Gurten und Planen mit einem Ratschenhebel (6), Ratschenzahnrad (10) und einem Befestigungsteil (1), wobei das Ratschenzahnrad (10) in dem Befestigungsteil (1) gelagert ist und der Ratschenhebel (6) in einer Grundstellung an dem Befestigungsteil (1) mittels einer Klinke (34) gesichert ist, **dadurch gekennzeichnet, dass** die Klinke (34) verschwenkbar angeordnet ist und mittels eines Betätigungshebels (27), der durch Druck in Richtung auf das Befestigungsteil (1) zu betätigen ist, aus der Sicherungsstellung in eine Freigabestellung bewegbar ist.

2. Ratschenspannvorrichtung (R) nach Anspruch 1, **dadurch gekennzeichnet, dass** ein Sperrschieber (18) und ein Mitnahmeschieber (28) vorgesehen sind und dass der Mitnahmeschieber (28) als ein einzeln montierbares Bauteil ausgebildet ist, das mit einem weiteren Mitnahmeteil (39) aufgrund dementsprechend gekrümmter Ausbildung des Mitnahmeschiebers- (28) und/oder Mitnahmeteils (39) formschlussverbunden ist.

3. Ratschenspannvorrichtung nach einem der vorangehenden Ansprüche, **dadurch gekennzeichnet, dass** die Klinke (34) an dem Ratschenhebel (6) gelagert ist.

4. Ratschenspannvorrichtung nach einem der vorangehenden Ansprüche, **dadurch gekennzeichnet, dass** die Klinke (34) an dem Befestigungsteil (1) gelagert ist.

5. Ratschenspannvorrichtung nach einem der vorangehenden Ansprüche, **dadurch gekennzeichnet, dass** die Klinke (34) an dem Betätigungshebel (27) angebracht ist.

6. Ratschenspannvorrichtung nach Anspruch 2, **dadurch gekennzeichnet, dass** das Mitnahmeteil (39) eine betätigungshebelfeste Aufnahme durchsetzt.

7. Ratschenspannvorrichtung nach einem der Ansprüche 2 oder 6, **dadurch gekennzeichnet, dass** das Mitnahmeteil (39) als langgestrecktes U-Teil ausgebildet ist, wobei ein einem Betätigungselement (27) am Ratschenhebel (6) zugeordnetes Ende lediglich in Formschluss zu dem Betätigungselement (27) steht.

8. Ratschenspannvorrichtung nach einem der Ansprüche 2, 6 oder 7, **dadurch gekennzeichnet, dass** das Betätigungselement (27) zugleich die Klinke (34) und den Mitnahmeschieber (28) betätigt.

9. Ratschenspannvorrichtung nach einem der Ansprüche 2 oder 6, 7 oder 8, **dadurch gekennzeichnet, dass** eine den Mitnahmeschieber (28) beaufschlagende Druckfeder (41) an dem Mitnahmeteil (39) gefangen ist.

10. Ratschenspannvorrichtung nach Anspruch 9, **dadurch gekennzeichnet, dass** die Druckfeder (41) zwischen der Aufnahme und dem Mitnahmeschieber (28) als jeweilige Anschläge gefangen ist und/oder dass die Druckfeder (41) wie auch eine den Sperrschieber (18) beaufschlagende Feder (19) orientiert an einer Längsrichtung des Ratschenhebels (6) bzw. des Befestigungsteiles (1) angeordnet sind.

11. Ratschenspannvorrichtung nach Anspruch 10, **dadurch gekennzeichnet, dass** die Federn (19, 41) in einem Längsquerschnitt sich überlappend angeordnet sind.

12. Ratschenspannvorrichtung nach einem der Ansprüche 2 oder 6 bis 11, **dadurch gekennzeichnet, dass** der Ratschenhebel (6) einen Blockierungsabschnitt aufweist zur Sperrung einer Bewegung des Sperrschiebers (18) in die Freigabestellung, wobei, bevorzugt, der Blockierungsabschnitt jedenfalls in der Verschlussstellung des Ratschenhebels (6) wirksam ist.

13. Ratschenspannvorrichtung nach Anspruch 12, **dadurch gekennzeichnet, dass** zwei Blockierungsvorsprünge (45) jeweils an einem Arm (6') des Ratschenhebels (6) ausgebildet sind.

14. Ratschenspannvorrichtung nach einem der Ansprüche 2 oder 6 bis 13, **dadurch gekennzeichnet, dass** der Mitnahmeschieber (28) zwei in Drehrichtung des Ratschenhebels (6) belastende Sperrabschnitte (36', 36") aufweist.

15. Ratschenspannvorrichtung nach einem der Ansprüche 2 oder 6 bis 14, **dadurch gekennzeichnet, dass** der Sperrschieber (18) zwei in Drehrichtung des Ratschenhebels (6) beabstandete Sperrnasen (26, 26') aufweist.

## Claims

1. Ratchet tensioning device (R) for tensioning articles such as belts and tarpaulins, comprising a ratchet lever (6), a ratchet gear wheel (10) and a fastening part (1), the ratchet gear wheel (10) being mounted in the fastening part (1), and the ratchet lever (6), in an initial position, being fixed to the fastening part (1) by a pawl (34), **characterised in that** the pawl (34) is arranged pivotably and can be moved from the fixing position into a release position by an actuation lever (27), which can be actuated by pressing towards the fastening part (1).

2. Ratchet tensioning device (R) according to claim 1, **characterised in that** a locking slide (18) and an entraining slide (28) are provided, and **in that** the entraining slide (28) is formed as an individually mountable component which is connected to a further entraining part (39) in a positive engagement by way of a correspondingly curved construction of the entraining slide (28) and/or entraining part (39).

3. Ratchet tensioning device according to any one of the preceding claims, **characterised in that** the pawl (34) is mounted on the ratchet lever (6).

4. Ratchet tensioning device according to any one of the preceding claims, **characterised in that** the pawl (34) is mounted on the fastening part (1).

5. Ratchet tensioning device according to any one of the preceding claims, **characterised in that** the pawl (34) is attached to the actuation lever (27).

6. Ratchet tensioning device according to claim 2, **characterised in that** the entraining part (39) penetrates a recess which is fixed in relation to the actuation lever.

7. Ratchet tensioning device according to either claim 2 or claim 6, **characterised in that** the entraining part (39) is formed as an elongate U-shaped part, an end which is associated with an actuation member (27) on the ratchet lever (6) merely being in a positive engagement with the actuation member (27).

8. Ratchet tensioning device according to any one of claims 2, 6 and 7, **characterised in that** the actuation member (27) actuates the pawl (34) and the entraining slide (28) simultaneously.

9. Ratchet tensioning device according to any one of claims 2, 6, 7 and 8, **characterised in that** a compression spring (41) which acts on the entraining slide (28) is captured on the entraining part (39).

10. Ratchet tensioning device according to claim 9, **characterised in that** the compression spring (41) is captured between the recess and the entraining slide (28), which each act as a stop, and/or **in that** the compression spring (41) and a spring (19) which acts on the locking slide (18) are orientated in a longitudinal direction of the ratchet lever (6) and the fastening part (1).

11. Ratchet part according to claim 10, **characterised in that** the springs (19, 41) are arranged so as to overlap in longitudinal cross-section.

12. Ratchet tensioning device according to any one of claims 2 and 6 to 11, **characterised in that** the ratchet lever (6) comprises an arresting portion for inhibiting movement of the locking slide (18) into the release position, the arresting portion preferably being effective in any case in the locked position of the ratchet lever (6).

13. Ratchet tensioning device according to claim 12, **characterised in that** two locking projections (45) are formed respectively on one arm (6') of the ratchet lever (6).

14. Ratchet tensioning device according to any one of claims 2 and 6 to 13, **characterised in that** the entraining slide (28) comprises two locking portions (36', 36") which provide a load in the direction of rotation of the ratchet lever (6).

15. Ratchet tensioning device according to any one of claims 2 and 6 to 14, **characterised in that** the locking slide (18) comprises two locking tabs (26, 26') which are spaced apart in the direction of rotation of the ratchet lever (6).

## Revendications

1. Dispositif à cliquet (R) pour la mise sous tension d'objets tels que des sangles et des bâches, avec un levier d'encliquetage (6), une roue dentée d'encliquetage (10) et une pièce de fixation (1), dans lequel la roue dentée d'encliquetage (10) est montée dans la pièce de fixation (1) et le levier d'encliquetage (6) est fixé, dans une position de base, sur la pièce de fixation (1) au moyen d'un cliquet (34), **caractérisé en ce que** le cliquet (34) est disposé de façon pivotante et peut être déplacé de la position de fixation à une position de libération au moyen d'un levier d'actionnement (27), qui peut être actionné par pression en direction de la pièce de fixation (1).

2. Dispositif à cliquet (R) selon la revendication 1, **caractérisé en ce qu'**il est prévu un curseur de blocage (18) et un curseur d'entraînement (28) et **en ce que** le curseur d'entraînement (28) se présente sous la forme d'un composant à monter individuellement, qui est assemblé en complémentarité de forme avec une autre pièce d'entraînement (39) en raison de la configuration incurvée correspondante du curseur d'entraînement (28) et/ou de la pièce d'entraînement (39).

3. Dispositif à cliquet selon l'une quelconque des revendications précédentes, **caractérisé en ce que** le cliquet (34) est monté sur le levier d'encliquetage (6).

4. Dispositif à cliquet selon l'une quelconque des revendications précédentes, **caractérisé en ce que** le cliquet (34) est monté sur la pièce de fixation (1).

5. Dispositif à cliquet selon l'une quelconque des revendications précédentes, **caractérisé en ce que** le cliquet (34) est installé sur le levier d'actionnement (27).

6. Dispositif à cliquet selon la revendication 2, **caractérisé en ce que** la pièce d'entraînement (39) traverse un logement solidaire du levier d'actionnement.

7. Dispositif à cliquet selon l'une quelconque des revendications 2 ou 6, **caractérisé en ce que** la pièce d'entraînement (39) est une pièce en U allongée, dans lequel une extrémité associée à un élément d'actionnement (27) sur le levier d'encliquetage (6) se trouve uniquement en assemblage par complémentarité de forme avec l'élément d'actionnement (27).

8. Dispositif à cliquet selon l'une quelconque des revendications 2, 6 ou 7, **caractérisé en ce que** l'élément d'actionnement (27) actionne en même temps le cliquet (34) et le curseur d'entraînement (28).

9. Dispositif à cliquet selon l'une quelconque des revendications 2 ou 6, 7 ou 8, **caractérisé en ce qu'**un ressort de pression (41) agissant sur le curseur d'entraînement (28) est captif sur la pièce d'entraînement (39).

10. Dispositif à cliquet selon la revendication 9, **caractérisé en ce que** le ressort de pression (41) est captif entre le logement et le curseur d'entraînement (28) servant respectivement de butées, et/ou **en ce que** le ressort de pression (41) ainsi qu'un ressort (19) agissant sur le curseur de blocage (18) sont disposés de façon orientée suivant une direction longitudinale du levier d'encliquetage (6) ou de la pièce de fixation (1).

11. Dispositif à cliquet selon la revendication 10, **caractérisé en ce que** les ressorts (19, 41) sont disposés en chevauchement dans une coupe longitudinale.

12. Dispositif à cliquet selon l'une quelconque des revendications 2 ou 6 à 11, **caractérisé en ce que** le levier d'encliquetage (6) comprend une section de blocage pour le blocage d'un mouvement du curseur de blocage (18) dans la position de libération, dans lequel la section de blocage est de préférence chaque fois active dans chaque cas dans la position de fermeture du levier d'encliquetage (6).

13. Dispositif à cliquet selon la revendication 12, **caractérisé en ce que** deux saillies de blocage (45) sont formées respectivement sur un bras (6') du levier d'encliquetage (6).

14. Dispositif à cliquet selon l'une quelconque des revendications 2 ou 6 à 13, **caractérisé en ce que** le curseur d'entraînement (28) comprend deux sections de blocage (36', 36") appliquant une charge dans le sens de rotation du levier d'encliquetage (6).

15. Dispositif à cliquet selon l'une quelconque des revendications 2 ou 6 à 14, **caractérisé en ce que** le curseur de blocage (18) présente deux ergots de blocage (26, 26') espacés dans le sens de rotation du levier d'encliquetage (6).
